# EUROPEAN PATENT APPLICATION

(11) **EP 4 672 866 A1**
(43) Date of publication of application: **31.12.2025**
(21) Application number: 25186093.8
(22) Date of filing: 27.06.2025
(51) Int. Cl.: H05B 47/115, H05B 47/19

(54) **LIGHTING DEVICE WITH SELF-TESTING AND GROUP CONTROL FUNCTIONS AND METHOD THEREOF**

(30) Priority: 28.06.2024 CN 202410858672
(71) Applicant: Xiamen PVTECH Co., Ltd., Xiamen, Fujian 361101 (CN)
(72) Inventor: XU, CHENGQUAN, Xiamen, 361101 (CN); LU, FUXING, Xiamen, 361101 (CN)
(74) Representative: Lang, Christian

(57) **Abstract**

The present invention provides a lighting device (1) and the self-testing method thereof. The lighting device (1) includes a communication module (11), a memory module (12), a microwave sensing module (13), a control module (14), and a light-emitting module (15). The memory module (12) is connected to the communication module (11) and stores an aging table and a suspect count. The microwave sensing module (13) detects a moving object and generates a detection signal (Ds). The control module (14) is connected to the communication module (11), the microwave sensing module (13), and the memory module (12). The light-emitting module (1) is connected to the control module (14). The control module (14) checks the aging table when the microwave sensing module (13) generates the detection signal (Ds), and sets the suspect count to an initial value when determining that a preset number of the trigger records exist within a time window. The control module (14) generates the activation signal (As) to activate the light-emitting module (15), and broadcasts the activation signal (As).

## Description

### TECHNICAL FIELD

The present invention relates to a lighting device, in particular to a lighting device with self-testing and group control functions. The present invention further relates to the self-testing method of the lighting device.

### BACKGROUND

A lighting device with group sensing and object detection functions (e.g., microwave sensing function) can activate upon detecting a moving object (e.g., a human, a vehicle, etc.) in a target area (e.g., a parking lot, a factory, a production line, a sports fields, etc.) and generate a detection signal. The lighting device may then generate an activation signal based on the detection signal and transmit the detection signal to other lighting devices within the same group to activate them. In this manner, these lighting devices can collectively illuminate the target area.

However, the microwave sensing module in this lighting device is prone to self-excitation due to ripple interference or environmental factors, leading to erroneous detection signals and malfunctioning of the object detection function. As a result, the lighting device may activate even when no moving object is detected.

China Patent No.: CN201601871U and China Patent Publication No.: CN20180570040A both disclose lighting devices with microwave sensing functions, yet these devices still fail to effectively resolve the aforementioned issue.

### SUMMARY

One embodiment of the present invention provides a lighting device with self-testing and group control functions, which includes a communication module, a memory module, a microwave sensing module, a control module, and a light-emitting module. The memory module is connected to the communication module and stores an aging table and a suspect count. The aging table records a plurality of trigger records, and the trigger records are the time points at which the communication module receives the activation signals transmitted from other lighting devices within a preset time interval. The microwave sensing module detects a moving object and generates a detection signal. The control module is connected to the communication module, the microwave sensing module, and the memory module. The light-emitting module is connected to the control module. The control module checks the aging table when the microwave sensing module generates the detection signal, and sets the suspect count to an initial value when determining that a preset number of the trigger records exist within a time window. The control module generates the activation signal based on the detection signal to activate the light-emitting module, and broadcasts the activation signal via the communication module.

In one embodiment, the central point of the time window is the time point when the detection signal is generated.

In one embodiment, the control module checks the aging table when the microwave sensing module generates the detection signal, increases the suspect count by 1 and reduces the sensitivity of the microwave sensing module when determining that the preset number of the trigger records do not exist within the time window. The control module generates the activation signal based on the detection signal to activate the light-emitting module, and broadcasts the activation signal via the communication module.

In one embodiment, the control module checks the aging table when the microwave sensing module generates the detection signal, increase the suspect count by 1 and set the microwave sensing module to an abnormal state when determining that the preset number of the trigger records do not exist within the time window and the suspect count exceeds a preset upper limit. The control module deactivates the microwave sensing module after the microwave sensing module is in the abnormal state.

In one embodiment, the endpoint of the preset time interval of the aging table is the time point of the most recent trigger record generated.

Another embodiment of the present invention provides a self-testing method for a lighting device with a group control function, which includes the following steps: storing an aging table and a suspect count by a memory module, wherein the aging table records a plurality of trigger records, and the trigger records are time points at which a communication module receives activation signals transmitted from other lighting devices within a preset time interval; detecting a moving object by a microwave sensing module to generate a detection signal; checking the aging table when the microwave sensing module generates the detection signal, and setting the suspect count to an initial value when determining that a preset number of the trigger records exist within a time window by a control module; generating the activation signal based on the detection signal to activate a light-emitting module by the control module; and broadcasting the activation signal via the communication module by the control module.

In one embodiment, the central point of the time window is the time point when the detection signal is generated.

In one embodiment, the method further includes the following steps: increasing the suspect count by 1 and reducing the sensitivity of the microwave sensing module when determining that the preset number of the trigger records do not exist within the time window by the control module; generating the activation signal based on the detection signal to activate the light-emitting module by the control module; and broadcasting the activation signal via the communication module by the control module.

In one embodiment, the method further includes the following steps: increasing the suspect count by 1 and setting the microwave sensing module to an abnormal state when determining that the preset number of the trigger records do not exist within the time window and the suspect count exceeds a preset upper limit by the control module; and deactivating the microwave sensing module by the control module after the microwave sensing module is in the abnormal state.

In one embodiment, the endpoint of the preset time interval of the aging table is the time point of the most recent trigger record generated.

The lighting device with self-testing and group control functions and the method thereof in accordance with the embodiments of the present invention may have the following advantages:
(1) In one embodiment of the present invention, the lighting device includes a communication module, a memory module, a microwave sensing module, a control module, and a light-emitting module. The memory module is connected to the communication module and stores an aging table and a suspect count. The aging table records a plurality of trigger records, and the trigger records are the time points at which the communication module receives the activation signals transmitted from other lighting devices within a preset time interval. The microwave sensing module detects a moving object and generates a detection signal. The control module is connected to the communication module, the microwave sensing module, and the memory module. The light-emitting module is connected to the control module. The control module checks the aging table when the microwave sensing module generates the detection signal, and sets the suspect count to an initial value when determining that a preset number of the trigger records exist within a time window. The control module generates the activation signal based on the detection signal to activate the light-emitting module, and broadcasts the activation signal via the communication module. Via the above-self-testing function, the lighting device can self-detect self-excitation, and actively reduces the sensitivity of or deactivates the microwave sensing module when self-excitation repeatedly occurs in order to prevent the faulty lighting device from affecting the group sensing function of other lighting devices. Thus, the lighting system can automatically ignore the microwave sensing function of the faulty lighting device so as to ensure the normal operation of the lighting system. Thus, the lighting system can meet actual requirements.
(2) In one embodiment of the present invention, when the microwave sensing module of the lighting device generates the detection signal, the control module checks the aging table and adjusts the suspect count based on whether the preset number of trigger records exist within the time window. The central point of the time window is the time point when the detection signal is generated. This time window mechanism enables the lighting device to accurately determine whether other lighting devices also detected the moving object and generated detection signals within a fixed period before and after the time point when the detection signal was generated, serving as a reference for the control module to determine whether the microwave sensing module has self-excitation. Therefore, this time window mechanism can effectively enhance the aforementioned self-testing function, so the self-testing function can be more precise.
(3) In one embodiment of the present invention, the control module of the lighting device can execute the self-testing function based on a specially designed aging table, where the endpoint of the preset time interval of the aging table is the time point of the most recently generated trigger record. Thus, the aging table is based on the time dimension. That is to say, the control module can continuously update the aging table, which improves the accuracy of the aforementioned self-testing function to prevent the lighting device from generating erroneous detection signals. In this way, the aforementioned self-testing mechanism can ensure normal operation of the lighting system.
(4) In one embodiment of the present invention, the self-testing function of the lighting device ensures normal operation of the lighting system, enabling effective application of the lighting device in various intelligent systems such as intelligent home systems, intelligent parking systems or other intelligent systems. Therefore, the lighting device can be more comprehensive in application and aligns with the future development trend.
(5) In one embodiment of the present invention, the lighting device features simple design and can implement the self-testing function through a simple and efficient mechanism. Thus, the lighting device can achieve desired effects without significantly increasing costs, so the practicality of the lighting device can be enhanced. Therefore, the lighting device can meet requirements of different applications.

Further scope of applicability of the present application will become more apparent from the detailed description given hereinafter. However, it should be understood that the detailed description and specific examples, while indicating exemplary embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a block diagram of a circuit structure of a lighting device with self-testing and group control functions in accordance with a first embodiment of the present invention.
FIG. 2 is a block diagram of a circuit structure of a lighting device with self-testing and group control functions in accordance with a second embodiment of the present invention.
FIG. 3 is a block diagram of a circuit structure of a lighting device with self-testing and group control functions in accordance with a third embodiment of the present invention.
FIG. 4 is a first flow chart of a self-testing method for a lighting device with a group control function in accordance with a fourth embodiment of the present invention.
FIG. 5 is a second flow chart of the self-testing method for the lighting device with the group control function in accordance with the fourth embodiment of the present invention.
FIG. 6 is a third flow chart of the self-testing method for the lighting device with the group control function in accordance with the fourth embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

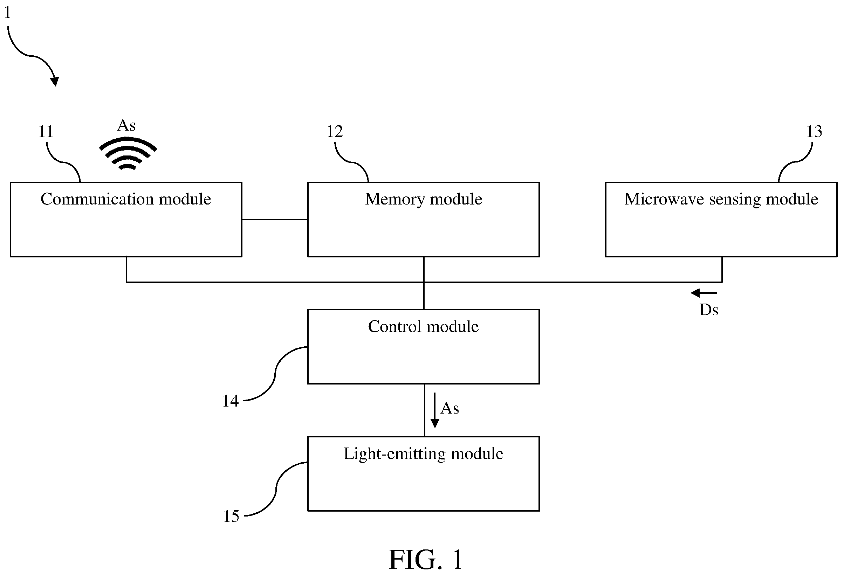

Please refer to FIG. 1, which is a block diagram of a circuit structure of a lighting device with self-testing and group control functions in accordance with a first embodiment of the present invention. As shown in FIG. 1, the lighting device 1 includes a communication module 11, a memory module 12, a microwave sensing module 13, a control module 14, and a light-emitting module 15. A lighting system 1 may include a plurality of lighting devices 1, and these lighting devices 1 have identical structures. Any lighting device 1 has a microwave sensing function, which can generate an activation signal As to activate the light-emitting module 15 thereof upon detecting a moving object, while simultaneously generating and broadcasting the activation signal As to activate other lighting devices 1. The lighting system is used to provide illumination for a target area, such as a parking lot, factory, production line, sports field, or similar environments.

The communication module 11 can perform wireless communication functions. In one embodiment, the communication module 11 may be an antenna. In another embodiment, the communication module 11 may also be various communication circuits.

The memory module 12 is connected to the communication module 11 and stores the aging table and the suspect count. The aging table records a plurality of trigger records, where these trigger records correspond to the time points at which the communication module 11 receives activation signals As transmitted from other lighting devices within a preset time interval. For example, the preset time interval may be 10 seconds, which can be adjusted based on actual requirements. The number of trigger records may be 4, which can also be adjusted as needed. Additionally, these trigger records may include sequence numbers and identifiers of the respective lighting devices. In one embodiment, the memory module 12 may be flash memory. In another embodiment, the memory module 12 may be any currently available type of memory. An example of the aging table is shown in Table 1 below:

**Table 1**

| Sequence number | Time point | Identifier of lighting device |
|---|---|---|
| 1 | 2024-02-06 10:57:35 | 0x1000 |
| 2 | 2024-02-06 10:57:45 | 0x1004 |
| 3 | 2024-02-06 10:57:48 | 0x1002 |
| 4 | 2024-02-06 10:58:00 | 0x1001 |

The endpoint of the preset time interval in the aging table is the most recent time point at which a trigger record was generated. Therefore, the aging table is based on the time dimension and can be continuously updated.

The microwave sensing module 13 can detect a moving object to generate a detection signal Ds. In one embodiment, the microwave sensing module 13 may be a microwave sensor.

The control module 14 is connected to the communication module 11, the microwave sensing module 13, and the memory module 12. In one embodiment, the control module 14 may be a microcontroller unit (MCU). In another embodiment, the control module 14 may be a central processing unit (CPU), an application-specific integrated circuit (ASIC), a field-programmable gate array (FPGA), or a similar component.

The light-emitting module 15 is connected to the control module 14. In one embodiment, the light-emitting module 15 may be a light-emitting diode LED. In another embodiment, the light-emitting module 15 may be an LED array, a bulb, or another similar light source.

When the microwave sensing module 13 generates the detection signal Ds, the control module 14 checks the aging table. If a preset number of trigger records are found within the time window, the control module 14 sets the suspect count to an initial value (For example, the initial value may be 0 and can be adjusted based on actual requirements; the preset number may be 2 and can also be adjusted as needed). Subsequently, the control module 14 generates the activation signal As based on the detection signal Ds to activate the light-emitting module 15 and broadcasts the activation signal As via the communication module 11. For example, the length of the time window may be 2 seconds (In another embodiment, the time window may be 3 seconds or longer and can be increased or decreased as needed). The central point of the time window is the time point at which the microwave sensing module 13 generates the detection signal Ds. That is, the control module 14 determines whether other lighting devices 1 have also detected a moving object and generated detection signals Ds within a fixed period before and after the time point of the detection signal Ds. For example, the fixed period may be 0.7 seconds (In another embodiment, the fixed period may be 1 second or longer and can be adjusted as needed). The preset time interval is greater than or equal to twice the fixed period. If other lighting devices 1 have detected the moving object, the control module 14 determines that the detection signal Ds from the microwave sensing module 13 is correct, indicating normal operation. In this case, the control module 14 does not adjust the suspect count and broadcasts the activation signal As to other lighting devices 1 to activate these lighting devices 1.

Conversely, if the microwave sensing module 13 generates the detection signal Ds and the control module 14 determines that the preset number of trigger records are not present within the time window, the control module 14 increases the suspect count by 1 and reduces the sensitivity of the microwave sensing module 13. The control module 14 then generates the activation signal As based on the detection signal Ds to activate the light-emitting module 15 and broadcasts the activation signal As via the communication module 11. That is, the control module 14 checks whether other lighting devices 1 have also detected a moving object and generated detection signals Ds within the fixed period before and after the time point of the detection signal Ds. If not, the control module 14 temporarily cannot confirm the correctness of the detection signal Ds. In this case, the control module 14 increases the suspect count by 1 and reduces the sensitivity of the microwave sensing module 13 to prevent erroneous detection signals Ds. Additionally, the control module 14 broadcasts the activation signal As to other lighting devices 1 to activate these lighting devices 1.

If the microwave sensing module 13 generates the detection signal Ds, the control module 14 determines that the preset number of trigger records are not present within the time window, and the suspect count exceeds a preset upper limit, the control module 14 sets the microwave sensing module 13 to an abnormal state. For example, the preset upper limit may be 3 and can be adjusted as needed. After setting the microwave sensing module 13 to the abnormal state, the control module 14 either deactivates the microwave sensing module 13 or ignores subsequent detection signals Ds from it. That is, the control module 14 checks whether other lighting devices 1 have also detected a moving object and generated detection signals Ds within the fixed period before and after the time point of the detection signal Ds. If not and the suspect count has exceeded the preset upper limit, the control module 14 determines that the detection signal Ds is erroneous and that the microwave sensing module 13 has exhibited repeated self-excitation. At this point, the control module 14 no longer trusts the detection signal Ds from the microwave sensing module 13 and either deactivates it or ignores subsequent detection signals Ds.

As demonstrated above, through the self-testing function of this embodiment, the lighting device 1 can self-detect self-excitation and proactively reduce the sensitivity of or deactivate the microwave sensing module 13 when repeated self-excitation occurs. This ensures that the faulty lighting device 1 does not affect the group sensing function of other lighting devices 1. Thus, the lighting system can automatically disregard the faulty lighting device 1's microwave sensing function, allowing the system to operate normally and meet actual requirements.

Furthermore, in this embodiment, the control module 14 of the lighting device 1 checks the aging table when the microwave sensing module 13 generates the detection signal Ds and adjusts the suspect count based on whether the preset number of trigger records exist within the time window. The central point of the time window is the time point of the detection signal Ds. This time window mechanism enables the lighting device 1 to accurately determine whether other lighting devices 1 have also detected a moving object and generated detection signals Ds within the fixed period before and after the time point of the detection signal Ds. This serves as a reference for the control module 14 to determine whether the microwave sensing module 13 is experiencing self-excitation. Therefore, the time window mechanism effectively enhances the aforementioned self-checking function in order to improve the precision thereof.

Additionally, in this embodiment, the control module 14 of the lighting device 1 can execute the self-testing function based on the specially designed aging table, where the endpoint of the aging table's preset time interval is the most recent time point at which a trigger record was generated. Thus, the aging table is based on the time dimension. That is, the control module 14 can continuously update the aging table, improving the accuracy of the self-testing function and preventing the lighting device 1 from generating erroneous detection signals. This self-checking mechanism ensures the lighting system operates normally.

The embodiment just exemplifies the present invention and is not intended to limit the scope of the present invention; any equivalent modification and variation according to the spirit of the present invention is to be also included within the scope of the following claims and their equivalents.

It is worthy to point out that the microwave sensing module in a currently available lighting device is prone to self-excitation due to ripple interference or environmental factors, leading to erroneous detection signals and malfunctioning of the object detection function. As a result, this lighting device may activate even when no moving object is detected. By contrast, according to one embodiment of the present invention, the lighting device includes a communication module, a memory module, a microwave sensing module, a control module, and a light-emitting module. The memory module is connected to the communication module and stores an aging table and a suspect count. The aging table records a plurality of trigger records, and the trigger records are the time points at which the communication module receives the activation signals transmitted from other lighting devices within a preset time interval. The microwave sensing module detects a moving object and generates a detection signal. The control module is connected to the communication module, the microwave sensing module, and the memory module. The light-emitting module is connected to the control module. The control module checks the aging table when the microwave sensing module generates the detection signal, and sets the suspect count to an initial value when determining that a preset number of the trigger records exist within a time window. The control module generates the activation signal based on the detection signal to activate the light-emitting module, and broadcasts the activation signal via the communication module. Via the above- self-testing function, the lighting device can self-detect self-excitation, and actively reduces the sensitivity of or deactivates the microwave sensing module when self-excitation repeatedly occurs in order to prevent the faulty lighting device from affecting the group sensing function of other lighting devices. Thus, the lighting system can automatically ignore the microwave sensing function of the faulty lighting device so as to ensure the normal operation of the lighting system. Thus, the lighting system can meet actual requirements.

Also, according to one embodiment of the present invention, when the microwave sensing module of the lighting device generates the detection signal, the control module checks the aging table and adjusts the suspect count based on whether the preset number of trigger records exist within the time window. The central point of the time window is the time point when the detection signal is generated. This time window mechanism enables the lighting device to accurately determine whether other lighting devices also detected the moving object and generated detection signals within a fixed period before and after the time point when the detection signal was generated, serving as a reference for the control module to determine whether the microwave sensing module has self-excitation. Therefore, this time window mechanism can effectively enhance the aforementioned self-testing function, so the self-testing function can be more precise.

Further, according to one embodiment of the present invention, the control module of the lighting device can execute the self-testing function based on a specially designed aging table, where the endpoint of the preset time interval of the aging table is the time point of the most recently generated trigger record. Thus, the aging table is based on the time dimension. That is to say, the control module can continuously update the aging table, which improves the accuracy of the aforementioned self-testing function to prevent the lighting device from generating erroneous detection signals. In this way, the aforementioned self-testing mechanism can ensure normal operation of the lighting system.

Moreover, according to one embodiment of the present invention, the self-testing function of the lighting device ensures normal operation of the lighting system, enabling effective application of the lighting device in various intelligent systems such as intelligent home systems, intelligent parking systems or other intelligent systems. Therefore, the lighting device can be more comprehensive in application and aligns with the future development trend.

Furthermore, according to one embodiment of the present invention, the lighting device features simple design and can implement the self-testing function through a simple and efficient mechanism. Thus, the lighting device can achieve desired effects without significantly increasing costs, so the practicality of the lighting device can be enhanced. Therefore, the lighting device can meet requirements of different applications. As set forth above, the lighting device with self-testing and group control functions according to the embodiments of the present invention can indeed achieve great technical effects.

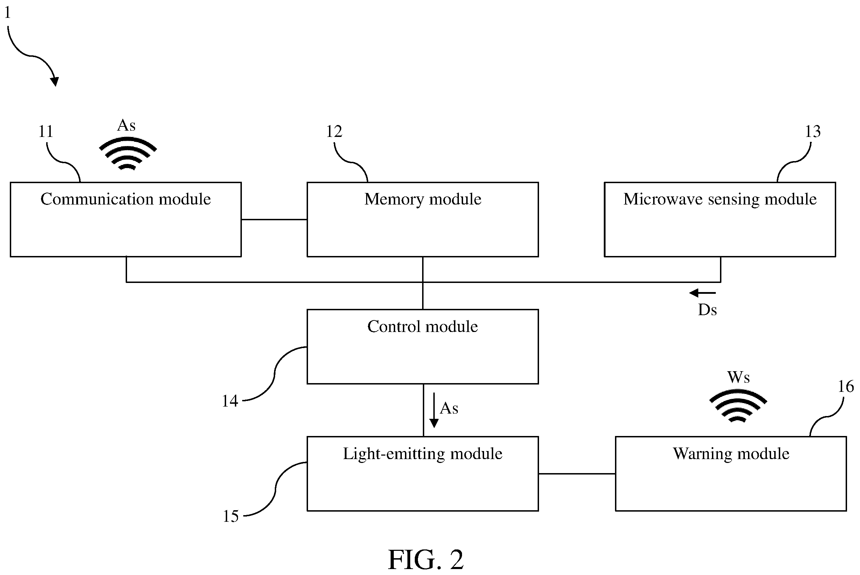

Please refer to FIG. 2, which is a block diagram of a circuit structure of a lighting device with self-testing and group control functions in accordance with a second embodiment of the present invention. As shown FIG. 2, the lighting device 1 includes a communication module 11, a memory module 12, a microwave sensing module 13, a control module 14, and a light-emitting module 15. A lighting system may include a plurality of lighting devices 1, all of which have the same structure. Each lighting device 1 has a microwave sensing function, which can generate an activation signal As to activate its light-emitting module 15 upon detecting a moving object, while simultaneously generating and broadcasting the activation signal As to activate other lighting devices 1. The lighting system is used to provide illumination for a target area (e.g., a parking lot, factory, production line, sports field, etc.).

The memory module 12 is connected to the communication module 11. The control module 14 is connected to the communication module 11, microwave sensing module 13, memory module 12, and light-emitting module 15.

Since the above components are identical to those in the previous embodiment, so these components will not be described in detail here. The difference between this embodiment and the previous embodiment is that the lighting device 1 of this embodiment further includes a warning module 16. The warning module 16 is connected to the control module 14. In one embodiment, the warning module 16 may be a warning light. In another embodiment, the warning module 16 may be a buzzer or other similar component.

Similarly, when the microwave sensing module 13 generates a detection signal Ds, the control module 14 checks the aging table and sets the suspect count to the initial value if a preset number of trigger records are found within the time window. Then, the control module 14 generates the activation signal As based on the detection signal Ds to activate the light-emitting module 15 and broadcasts the activation signal As via the communication module 11.

If the microwave sensing module 13 generates a detection signal Ds but the control module 14 determines that there is no preset number of trigger records within the time window, the control module 14 increases the suspect count by 1 and reduces the sensitivity of the microwave sensing module 13. Then, the control module 14 generates the activation signal As based on the detection signal Ds to activate the light-emitting module 15 and broadcasts the activation signal As via the communication module 11.

As mentioned earlier, if the microwave sensing module 13 generates a detection signal Ds and the control module 14 determines that there is no preset number of trigger records within the time window, the control module 14 increases the suspect count by 1. If the suspect count exceeds a preset upper limit, the microwave sensing module 13 is set to an abnormal state. Subsequently, the control module 14 either shuts down the microwave sensing module 13 or ignores the next detection signal Ds received from the microwave sensing module 13. At the same time, the control module 14 controls the warning module 16 to generate a warning signal Ws to alert the user to repair the lighting device 1.

In this embodiment, when the microwave sensing module 13 generates a detection signal Ds, the control module 14 of the lighting device 1 checks the aging table and adjusts the suspect count based on whether there is a preset number of trigger records within the time window, where the central point of the time window is the time point at which the detection signal Ds is generated. This time window mechanism allows the lighting device 1 to accurately determine whether other lighting devices 1 have also detected a moving object and generated detection signals Ds within a fixed period before and after the time point of the detection signal Ds, serving as a reference for the control module 14 to determine whether the microwave sensing module 13 is experiencing self-excitation. Therefore, this time window mechanism effectively enhances the aforementioned self-testing function, such that the precision of the self-testing function can be enhanced.

Additionally, in this embodiment, the self-testing function of the lighting device 1 ensures the normal operation of the lighting system, allowing the lighting device 1 to be effectively applied to various intelligent systems, such as intelligent home systems, intelligent parking systems, or other similar systems. Thus, the lighting device 1 has broader applications and aligns with future development trends.

Moreover, in this embodiment, the design of the lighting device 1 is simple, and the self-checking function can be implemented through a straightforward and efficient mechanism. As a result, the lighting device 1 achieves the desired function without significantly increasing costs, thereby improving the practicality thereof. Hence, the lighting device 1 can truly meet diverse application requirements.

The embodiment just exemplifies the present invention and is not intended to limit the scope of the present invention; any equivalent modification and variation according to the spirit of the present invention is to be also included within the scope of the following claims and their equivalents.

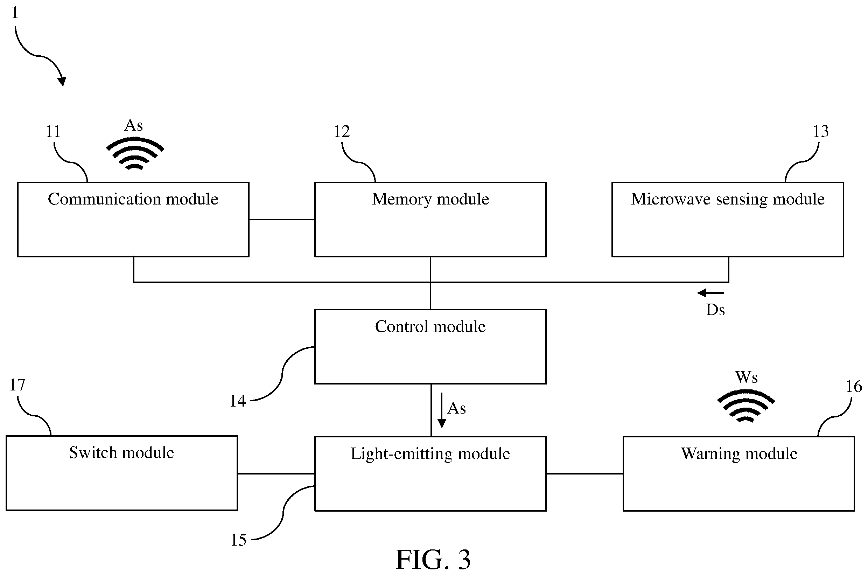

Please refer to FIG. 3, which is a block diagram of a circuit structure of a lighting device with self-testing and group control functions in accordance with a third embodiment of the present invention. As shown in FIG. 3, the lighting device 1 includes a communication module 11, a memory module 12, a microwave sensing module 13, a control module 14, a light-emitting module 15, and a warning module 16. A lighting system may include a plurality of lighting devices 1, all of which have the same structure. Each lighting device 1 has a microwave sensing function, which can generate an activation signal As to activate the light-emitting module 15 thereof upon detecting a moving object, while simultaneously generating and broadcasting the activation signal As to activate other lighting devices 1. The lighting system can provide illumination for a target area (e.g., a parking lot, factory, production line, sports field, etc.).

The memory module 12 is connected to the communication module 11. The control module 14 is connected to the communication module 11, microwave sensing module 13, memory module 12, light-emitting module 15, and warning module 16.

Since the above components are identical to those in the previous embodiment, these components will not be described in detail here. The difference between this embodiment and the previous embodiment is that the lighting device 1 of this embodiment further includes a switch module 17. The switch module 17 is connected to the control module 14. In one embodiment, the switch module 17 may be a DIP switch. In another embodiment, the switch module 17 may be a button, rotary knob, or other similar component.

Similarly, when the microwave sensing module 13 generates a detection signal Ds, the control module 14 chesk the aging table and sets the suspect count to the initial value if a preset number of trigger records are found within the time window. Then, the control module 14 generates the activation signal As based on the detection signal Ds to activate the light-emitting module 15 and broadcasts the activation signal As via the communication module 11.

If the microwave sensing module 13 generates a detection signal Ds but the control module 14 determines that there is no preset number of trigger records within the time window, the control module 14 increases the suspect count and reduces the sensitivity of the microwave sensing module 13. Then, the control module 14 generates the activation signal As based on the detection signal Ds to activate the light-emitting module 15 and broadcasts the activation signal As via the communication module 11.

As mentioned earlier, if the microwave sensing module 13 generates a detection signal Ds and the control module 14 determines that there is no preset number of trigger records within the time window, the control module 14 increases the suspect count. If the suspect count exceeds a preset upper limit, the microwave sensing module 13 is set to an abnormal state. Subsequently, the control module 14 either shuts down the microwave sensing module 13 or ignores the next detection signal Ds received from the microwave sensing module 13. At the same time, the control module 14 controls the warning module 16 to generate a warning signal Ws to alert the user to repair the lighting device 1.

The user can disable the aforementioned self-testing function by operating the switch module 17. The user can also re-enable the self-checking function by operating the switch module 17. When the user re-enables the self-testing function via the switch module 17, the control module 14 clears all abnormal information, restoring the lighting device 1 to the initial operating state.

The embodiment just exemplifies the present invention and is not intended to limit the scope of the present invention; any equivalent modification and variation according to the spirit of the present invention is to be also included within the scope of the following claims and their equivalents.

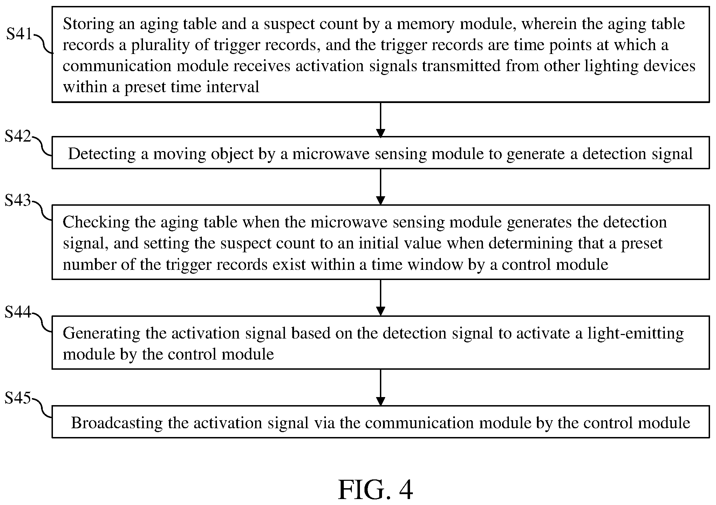

Please refer to FIG. 4, which is a first flow chart of a self-testing method for a lighting device with a group control function in accordance with a fourth embodiment of the present invention. As shown in FIG. 4, the method includes the following steps:
Step S41: storing an aging table and a suspect count by a memory module, wherein the aging table records a plurality of trigger records, and the trigger records are time points at which a communication module receives activation signals transmitted from other lighting devices within a preset time interval.
Step S42: detecting a moving object by a microwave sensing module to generate a detection signal.
Step S43: checking the aging table when the microwave sensing module generates the detection signal, and setting the suspect count to an initial value when determining that a preset number of the trigger records exist within a time window by a control module.
Step S44: generating the activation signal based on the detection signal to activate a light-emitting module by the control module.
Step S45: broadcasting the activation signal via the communication module by the control module.

The embodiment just exemplifies the present invention and is not intended to limit the scope of the present invention; any equivalent modification and variation according to the spirit of the present invention is to be also included within the scope of the following claims and their equivalents.

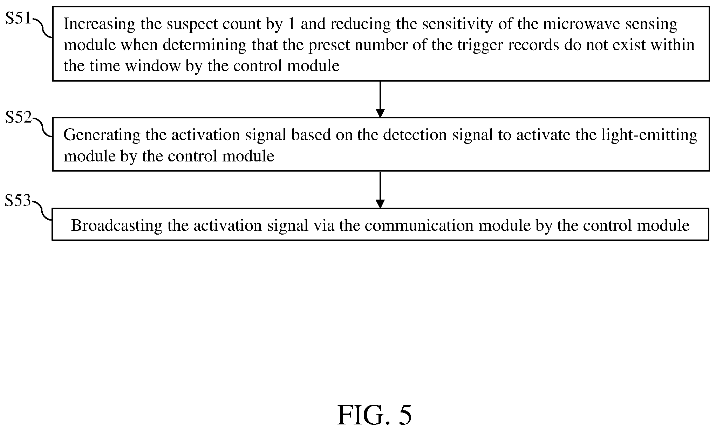

Please refer to FIG. 5, which is a second flow chart of the self-testing method for the lighting device with the group control function in accordance with the fourth embodiment of the present invention. As shown in FIG. 5, the method further includes the following steps:
Step S51: increasing the suspect count by 1 and reducing the sensitivity of the microwave sensing module when determining that the preset number of the trigger records do not exist within the time window by the control module.
Step S52: generating the activation signal based on the detection signal to activate the light-emitting module by the control module.
Step S53: broadcasting the activation signal via the communication module by the control module.

The embodiment just exemplifies the present invention and is not intended to limit the scope of the present invention; any equivalent modification and variation according to the spirit of the present invention is to be also included within the scope of the following claims and their equivalents.

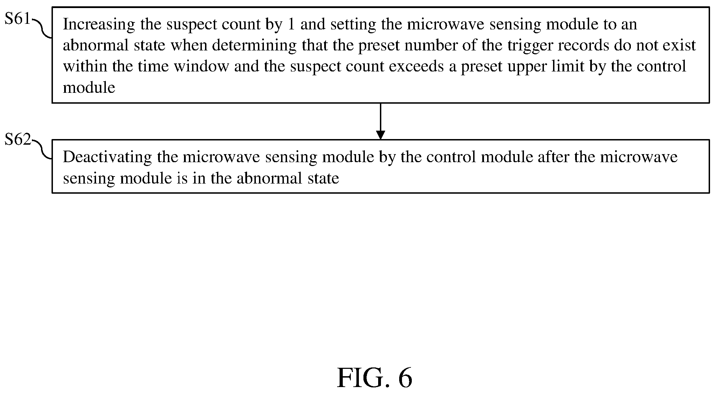

Please refer to FIG. 6, which is a third flow chart of the self-testing method for the lighting device with the group control function in accordance with the fourth embodiment of the present invention. As shown in FIG. 6, the method further includes the following steps:
Step S61: increasing the suspect count by 1 and setting the microwave sensing module to an abnormal state when determining that the preset number of the trigger records do not exist within the time window and the suspect count exceeds a preset upper limit by the control module.
Step S62: deactivating the microwave sensing module by the control module after the microwave sensing module is in the abnormal state.

The embodiment just exemplifies the present invention and is not intended to limit the scope of the present invention; any equivalent modification and variation according to the spirit of the present invention is to be also included within the scope of the following claims and their equivalents.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

To sum up, according to one embodiment of the present invention, the lighting device includes a communication module, a memory module, a microwave sensing module, a control module, and a light-emitting module. The memory module is connected to the communication module and stores an aging table and a suspect count. The aging table records a plurality of trigger records, and the trigger records are the time points at which the communication module receives the activation signals transmitted from other lighting devices within a preset time interval. The microwave sensing module detects a moving object and generates a detection signal. The control module is connected to the communication module, the microwave sensing module, and the memory module. The light-emitting module is connected to the control module. The control module checks the aging table when the microwave sensing module generates the detection signal, and sets the suspect count to an initial value when determining that a preset number of the trigger records exist within a time window. The control module generates the activation signal based on the detection signal to activate the light-emitting module, and broadcasts the activation signal via the communication module. Via the above- self-testing function, the lighting device can self-detect self-excitation, and actively reduces the sensitivity of or deactivates the microwave sensing module when self-excitation repeatedly occurs in order to prevent the faulty lighting device from affecting the group sensing function of other lighting devices. Thus, the lighting system can automatically ignore the microwave sensing function of the faulty lighting device so as to ensure the normal operation of the lighting system. Thus, the lighting system can meet actual requirements.

Also, according to one embodiment of the present invention, when the microwave sensing module of the lighting device generates the detection signal, the control module checks the aging table and adjusts the suspect count based on whether the preset number of trigger records exist within the time window. The central point of the time window is the time point when the detection signal is generated. This time window mechanism enables the lighting device to accurately determine whether other lighting devices also detected the moving object and generated detection signals within a fixed period before and after the time point when the detection signal was generated, serving as a reference for the control module to determine whether the microwave sensing module has self-excitation. Therefore, this time window mechanism can effectively enhance the aforementioned self-testing function, so the self-testing function can be more precise.

Further, according to one embodiment of the present invention, the control module of the lighting device can execute the self-testing function based on a specially designed aging table, where the endpoint of the preset time interval of the aging table is the time point of the most recently generated trigger record. Thus, the aging table is based on the time dimension. That is to say, the control module can continuously update the aging table, which improves the accuracy of the aforementioned self-testing function to prevent the lighting device from generating erroneous detection signals. In this way, the aforementioned self-testing mechanism can ensure normal operation of the lighting system.

Moreover, according to one embodiment of the present invention, the self-testing function of the lighting device ensures normal operation of the lighting system, enabling effective application of the lighting device in various intelligent systems such as intelligent home systems, intelligent parking systems or other intelligent systems. Therefore, the lighting device can be more comprehensive in application and aligns with the future development trend.

Furthermore, according to one embodiment of the present invention, the lighting device features simple design and can implement the self-testing function through a simple and efficient mechanism. Thus, the lighting device can achieve desired effects without significantly increasing costs, so the practicality of the lighting device can be enhanced. Therefore, the lighting device can meet requirements of different applications.

It will be apparent to those skilled in the art that various modifications and variations can be made to the disclosed embodiments. It is intended that the specification and examples be considered as exemplary only, with a true scope of the present invention being indicated by the following claims and their equivalents.

## Claims

1. A lighting device with self-testing and group control functions, **characterized by** comprising:
a communication module;
a memory module, connected to the communication module and configured to store an aging table and a suspect count, wherein the aging table is configured to record a plurality of trigger records, and the trigger records are time points at which the communication module receives activation signals transmitted from other lighting devices within a preset time interval;
a microwave sensing module, configured to detect a moving object and generate a detection signal;
a control module, connected to the communication module, the microwave sensing module, and the memory module; and
a light-emitting module, connected to the control module;
wherein the control module is configured to check the aging table when the microwave sensing module generates the detection signal, and set the suspect count to an initial value when determining that a preset number of the trigger records exist within a time window, wherein the control module is configured to generate the activation signal based on the detection signal to activate the light-emitting module, and broadcast the activation signal via the communication module.

2. The lighting device with self-testing and group control functions as claimed in claim 1, **characterized in that** a central point of the time window is a time point when the detection signal is generated.

3. The lighting device with self-testing and group control functions as claimed in claim 1, **characterized in that** the control module is configured to check the aging table when the microwave sensing module generates the detection signal, increase the suspect count by 1 and reduce a sensitivity of the microwave sensing module when determining that the preset number of the trigger records do not exist within the time window, wherein the control module is configured to generate the activation signal based on the detection signal to activate the light-emitting module, and broadcast the activation signal via the communication module.

4. The lighting device with self-testing and group control functions as claimed in claim 1, **characterized in that** the control module is configured to check the aging table when the microwave sensing module generates the detection signal, increase the suspect count by 1 and set the microwave sensing module to an abnormal state when determining that the preset number of the trigger records do not exist within the time window and the suspect count exceeds a preset upper limit, wherein the control module is configured to deactivate the microwave sensing module after the microwave sensing module is in the abnormal state.

5. The lighting device with self-testing and group control functions as claimed in claim 1, **characterized in that** an endpoint of the preset time interval of the aging table is a time point of a most recent trigger record generated.

6. A self-testing method for lighting device with group control function, **characterized by** comprising:
storing an aging table and a suspect count by a memory module, wherein the aging table is configured to record a plurality of trigger records, and the trigger records are time points at which a communication module receives activation signals transmitted from other lighting devices within a preset time interval;
detecting a moving object by a microwave sensing module to generate a detection signal;
checking the aging table when the microwave sensing module generates the detection signal, and setting the suspect count to an initial value when determining that a preset number of the trigger records exist within a time window by a control module;
generating the activation signal based on the detection signal to activate a light-emitting module by the control module; and
broadcasting the activation signal via the communication module by the control module.

7. The self-testing method for lighting device with group control function as claimed in claim 6, **characterized in that** a central point of the time window is a time point when the detection signal is generated.

8. The self-testing method for lighting device with group control function as claimed in claim 6, **characterized by** further comprising:
increasing the suspect count by 1 and reducing a sensitivity of the microwave sensing module when determining that the preset number of the trigger records do not exist within the time window by the control module;
generating the activation signal based on the detection signal to activate the light-emitting module by the control module; and
broadcasting the activation signal via the communication module by the control module.

9. The self-testing method for lighting device with group control function as claimed in claim 8, **characterized by** further comprising:
increasing the suspect count by 1 and setting the microwave sensing module to an abnormal state when determining that the preset number of the trigger records do not exist within the time window and the suspect count exceeds a preset upper limit by the control module; and
deactivating the microwave sensing module by the control module after the microwave sensing module is in the abnormal state.

10. The self-testing method for lighting device with group control function as claimed in claim 6, **characterized in that** an endpoint of the preset time interval of the aging table is a time point of a most recent trigger record generated.
